# FASCICULE DE BREVET EUROPEEN

(11) **EP 3 368 417 B1**
(45) Date de publication et mention de la délivrance du brevet: **24.07.2019**
(21) Numéro de dépôt: 16784933.0
(22) Date de dépôt: 24.10.2016
(51) Int. Cl.: B64D 11/06, A47C 7/56, B60N 2/30, B64D 25/04

(54) **ENSEMBLE COMPORTANT UN SIÈGE PASSAGER ET UN SIÈGE POUR PERSONNEL DE BORD**
ANORDNUNG MIT EINEM PASSAGIERSITZ UND EINEM SITZ FÜR BORDPERSONAL
ASSEMBLY COMPRISING A PASSENGER SEAT AND A SEAT FOR ON-BOARD PERSONNEL

(30) Priorité: 26.10.2015 US 201562246332 P
(43) Date de publication de la demande: 05.09.2018
(73) Titulaire: Zodiac Seats France, 36100 Issoudun (FR)
(72) Inventeur: TERRAS, Guillaume, 36100 Issoudun (FR); DELAGE, Vincent, 36100 Issoudun (FR); GILL, Alison, 31100 Toulouse (FR)
(74) Mandataire: Marconnet, Sébastien
(86) Numéro de dépôt international: PCT/EP2016/075564
(87) Numéro de publication internationale: WO 2017/072077

(56) Documents cités:
- EP-A1- 0 526 720
- EP-A1- 2 796 371
- US-A- 396 271
- US-A- 3 202 453
- US-A- 3 594 037

## Description

La présente invention porte sur un ensemble comportant un siège passager et un siège pour personnel de bord.

Les compagnies aériennes ainsi que les constructeurs d'avions cherchent constamment à augmenter la densité de sièges installés dans la cabine, en allant même jusqu'à supprimer des ameublements de l'avion dans certaines configurations pour pouvoir accueillir plus de passagers.

Le document EP0526720 décrit un ensemble formé par un siège passager et un siège pour personnel de bord. Le siège pour personnel de bord comporte un raccord de connexion au siège passager adjacent.

Le document EP2796371 décrit un siège pour personnel de bord installé dans une cabine d'aéronef et comprenant un élément de dossier et une assise. Le siège pour personnel de bord comprend en outre un élément adaptateur configuré pour relier mécaniquement ledit siège à la cabine.

Le document US3594037 décrit un siège pour personnel de bord apte à se replier automatiquement lorsque la personne se lève du siège. Un appui-tête, un dossier, ainsi qu'une assise, sont reliés mécaniquement entre eux de façon à permettre un mouvement simultané.

Il existe toutefois certains éléments obligatoires qu'il n'est pas possible de supprimer pour gagner de l'espace, tels que les sièges pour personnel de bord dont le nombre est imposé par les règlementations en fonction du nombre de passagers. Le positionnement de ces sièges est effectué notamment en fonction d'une proximité des portes de sortie et de règles relatives à une vision directe, c'est-à-dire une vision sans obstacle sur les allées et la cabine en position assise.

En outre, un espace libre au niveau de la zone de porte doit être prévu pour permettre l'évacuation des passagers en cas de situation dangereuse. Une telle contrainte sur la configuration de la cabine est susceptible d'empêcher l'implantation d'une rangée de sièges de passagers supplémentaire à proximité d'une zone de porte dans laquelle il est nécessaire d'installer un siège pour personnel de bord.

L'invention vise notamment à remédier efficacement à cet inconvénient en proposant un ensemble destiné à être installé dans une cabine d'aéronef, comportant un siège passager, notamment multiplaces, muni d'un élément structurel, et un siège pour personnel de bord comportant:
- une structure de siège,
- un dossier et une assise reliés mécaniquement à la structure de siège,
- ladite assise étant mobile entre une position rabattue contre le dossier et une position déployée,
- la structure de siège comporte des moyens de liaison mécanique avec l'élément structurel du siège passager adjacent,
caractérisé en ce que le siège pour personnel de bord comporte en outre un système de guidage pour guider un déplacement de l'ensemble assise et dossier entre une position d'utilisation et une position rangée au moins en partie sous le siège passager.

L'invention permet d'obtenir un gain d'espace dans la cabine, dans la mesure où l'écart entre le siège passager et le siège pour personnel de bord est réduit voire supprimé. En conséquence, l'invention procure une plus grande flexibilité pour l'élaboration de la configuration de la cabine, notamment en autorisant l'ajout de rangées de sièges passagers au plus près des zones de porte et/ou en conférant plus de confort pour les passagers par augmentation de la longueur entre les sièges.

L'invention pourra également permettre de partager certains éléments structurels des deux sièges, ce qui autorise une réduction du nombre de pièces ainsi que du poids de l'ensemble.

L'invention réduit en outre la durée d'installation et la maintenance de l'ensemble de sièges.

Selon une réalisation, la structure de siège comporte deux montants positionnés de part et d'autre de l'ensemble assise et dossier.

Selon une réalisation, les moyens de liaison sont constitués par des ouvertures traversantes réalisées dans les montants de la structure de siège.

Selon une réalisation, les ouvertures traversantes sont réalisées dans des portions en saillies des montants dirigées dans une direction opposée à celle de l'assise.

Selon une réalisation, le système de guidage est formé par un axe de l'assise ayant des extrémités insérées dans des rainures correspondantes réalisées dans les montants, et des tétons solidaires de bords latéraux du dossier insérés dans des rainures correspondantes réalisées dans les montants.

Selon une réalisation, ledit siège comporte au moins un organe d'amortissement du déplacement de l'ensemble assise et dossier lorsque ledit ensemble assise et dossier passe de la position d'utilisation à la position rangée.

Selon une réalisation, l'organe d'amortissement est constitué par un vérin à gaz muni d'une première extrémité montée rotative par rapport à un montant et d'une deuxième extrémité montée rotative par rapport à l'axe de l'assise.

Selon une réalisation, les montants comportent des moyens de reprise d'effort en cas de crash.

Selon une réalisation, les moyens de reprise d'effort comportent au moins un bras assurant une liaison mécanique entre un montant et un pied de support du siège passager positionné entre les montants.

Selon une réalisation, le siège pour personnel de bord est tourné dans une direction opposée à celle du siège passager.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
- Les figures 1 à 3 sont des vues en perspective sous différents angles d'un siège pour personnel de bord selon la présente invention fixé sur un siège passager de type classique;
- Les figures 4a et 4b sont des vues en perspective suivant deux angles opposés du siège pour personnel de bord selon l'invention;
- Les figures 5a à 5c sont des vues de côté de l'ensemble siège pour personnel de bord et siège passager illustrant la cinématique de passage d'une position d'utilisation à une position rangée du siège pour personnel de bord selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

En outre, dans la description qui suit, les termes relatifs du type "haut" et "bas" sont entendus par rapport à un siège en position d'utilisation dans une cabine d'aéronef. Par ailleurs, on considère que la partie arrière du siège est située du côté du dossier, tandis que la partie avant du siège est située du côté opposé au dossier. En outre, les faces internes des montants sont tournées vers l'assise du siège, tandis que les faces externes sont tournées du côté opposé.

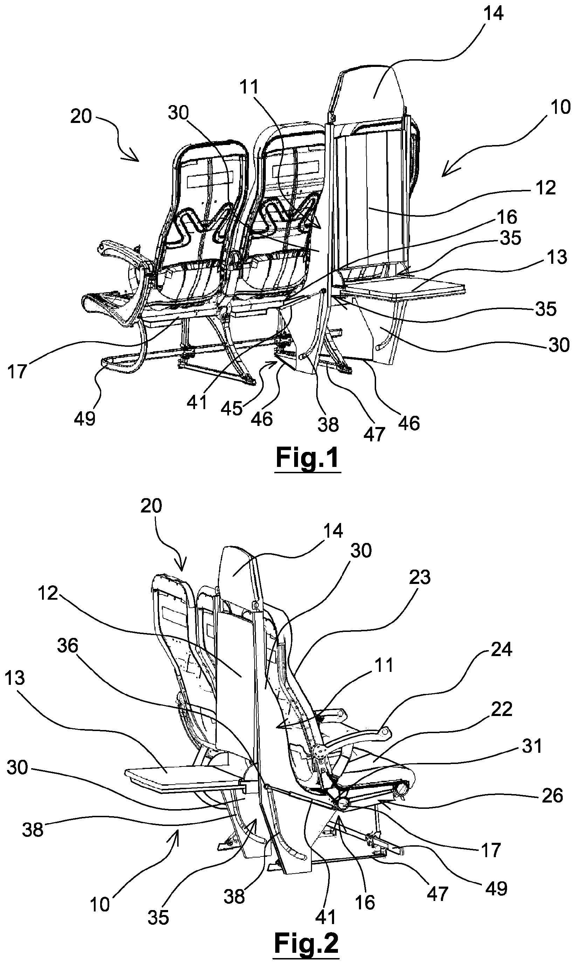

Les figures 1, 2, 3, 4a et 4b, montrent un siège pour personnel de bord 10 comportant une structure de siège 11, ainsi qu'un dossier 12 et une assise 13. Le dossier 12 et l'assise 13 sont reliés mécaniquement à la structure de siège 11.

L'assise 13 est montée pivotante par rapport au dossier 12. L'assise 13 est mobile entre une position rabattue contre le dossier 12 et une position déployée dans laquelle l'assise 13 s'étend dans un plan sensiblement horizontal pour permettre à une personne de s'assoir. Un repose-tête fixe 14 pourra être situé en partie haute de la structure de siège 11.

La structure de siège 11 comporte des moyens de liaison mécanique 16 avec un élément structurel 17 d'un siège passager 20 adjacent.

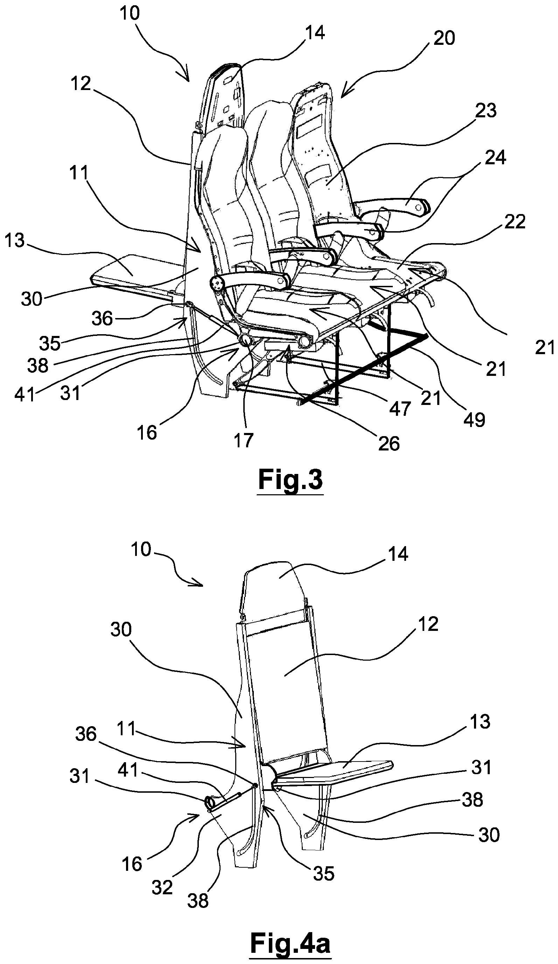

En l'occurrence, comme on peut le voir clairement sur la figure 3, le siège passager 20 comporte trois places 21 définies chacune par une assise 22 et un dossier 23 correspondant. Des accoudoirs de type relevables ou fixes sont positionnés de part et d'autre de chaque place. Le siège passager 20 est en outre constitué d'une structure 26 formant ossature de support des différents éléments du siège. Cette structure 26 comporte une poutre transversale formant l'élément structurel 17 auquel est relié mécaniquement le siège pour personnel de bord 10. La liaison mécanique pourra par exemple être réalisée sur des tronçons de la poutre 17 situés de part et d'autre d'un dossier 23, ou à tout autre endroit le long du siège 20.

Le siège pour personnel de bord 10 est tourné dans une direction opposée à celle du siège passager 20. Autrement dit, le siège pour personnel de bord 10 et le siège passager 20 sont positionnés dos à dos l'un par rapport à l'autre.

Plus précisément, la structure de siège 11 comporte deux montants 30 positionnés de part et d'autre de l'ensemble assise 13 et dossier 12. Les moyens de liaison mécaniques 16 sont constitués par des ouvertures 31 traversantes réalisées dans les montants 30 de la structure de siège 11. Ces ouvertures 31 autorisent le passage de la poutre transversale 17.

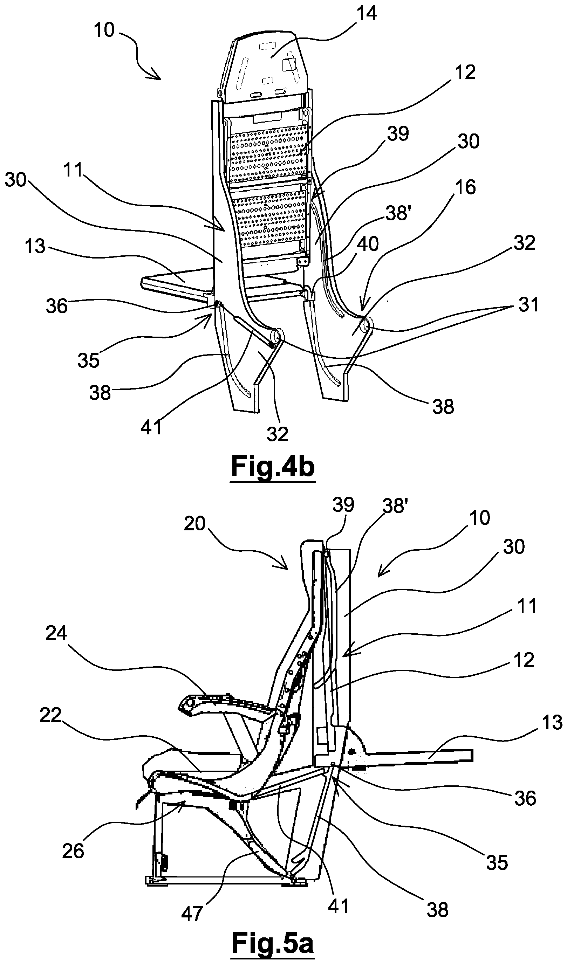

Comme on peut le voir sur les figures 4a et 4b, chaque ouverture 31 traversante est réalisée dans une portion en saillie 32 d'un montant 30 correspondant dirigée dans une direction opposée à celle de l'assise 13. En variante, les moyens de liaison mécanique 16 pourraient être constitués par un dispositif de serrage à pinces permettant une fixation par serrage de la poutre transversale 17, ou tout autre dispositif adapté à l'application.

Les bords arrières des montants 30 tournés vers le siège passager 20 et délimitant les portions en saillie 32 épousent de préférence la forme du dossier 23 du siège passager 20, tel que montré sur les figures 2 et 3.

En outre, un système de guidage 35, visible en figura 4b, assure un guidage du déplacement de l'ensemble assise 13 et dossier 12 entre une position d'utilisation dans laquelle l'assise 13 et le dossier 12 se situent à une hauteur permettant à une personne de s'assoir lorsque l'assise 13 est déployée, et une position rangée dans laquelle l'ensemble assise 13 et dossier 12 est positionné au moins en partie sous le siège passager 20.

Le système de guidage 35 est formé par un axe 36 s'étendant du côté d'un bord arrière de l'assise 13 et ayant des extrémités insérées dans des rainures 38 correspondantes réalisées dans les faces internes des montants 30 en vis-à-vis l'une de l'autre. En outre, des tétons 39 solidaires de bords latéraux du dossier 12 sont insérés dans des rainures 38' correspondantes réalisées dans les faces internes des montants 30.

Les rainures 38' permettant le déplacement du dossier 12 sont positionnées au-dessus des rainures 38 permettant le déplacement de l'assise 13. Les rainures 38 et 38' s'étendent sensiblement suivant une direction d'allongement longitudinale des montants 30. Les rainures 38 et 38' sont légèrement incurvées, la partie inférieure des rainures 38, 38' étant dirigées vers les portions en saillie 32 des montants 30.

Le maintien de l'ensemble assise 13 et dossier 12 dans la position d'utilisation est assuré au moyen d'un élément de verrouillage 40 monté sur l'axe 36 venant s'engager dans une lumière correspondante.

Au moins un organe d'amortissement 41 permet d'amortir, lors de sa compression, le déplacement de l'ensemble assise 13 et dossier 12 lorsque le siège 10 passe de la position d'utilisation à la position rangée. Il pourra également faciliter, lors de sa décompression, le déploiement de l'assise 13 et du dossier 12 lorsque le siège 10 passe de la position rangée à la position d'utilisation.

En l'occurrence, on utilise deux organes d'amortissement 41 constitués par deux vérins à gaz positionnés de part et d'autre du siège 10. Chaque vérin à gaz 41 est muni d'une première extrémité montée rotative par rapport à un montant 30 et d'une deuxième extrémité montée rotative par rapport à l'axe 36 de l'assise 13. A cet effet, la rainure 38 est traversante pour permettre l'établissement d'une liaison pivot entre une extrémité de l'axe 36 et l'extrémité du vérin à gaz 41 du côté de la face externe des montants 30.

En outre, les montants 30 pourront comporter en partie inférieure des moyens de reprise d'effort 45 en cas de crash, tel que montré sur la figure 1. Ces moyens de reprise d'effort 45 comportent deux bras 46. Chaque bras 46 assure une liaison mécanique entre un montant 30 correspondant et un pied de support 47 du siège passager 10 positionné entre les montants 30.

La barre 49 reliée aux pieds de support 47 du siège 20 a une fonction de maintien mécanique du siège ainsi qu'une fonction d'arrêt des bagages.

On décrit ci-après, en référence avec les figures 5a à 5c, la cinématique de passage du siège pour personnel de bord 10 selon l'invention d'une position d'utilisation à une position rangée.

Sur la figure 5a, le siège 10 est représenté en position d'utilisation avec un dossier 12 et une assise 13 en position haute.

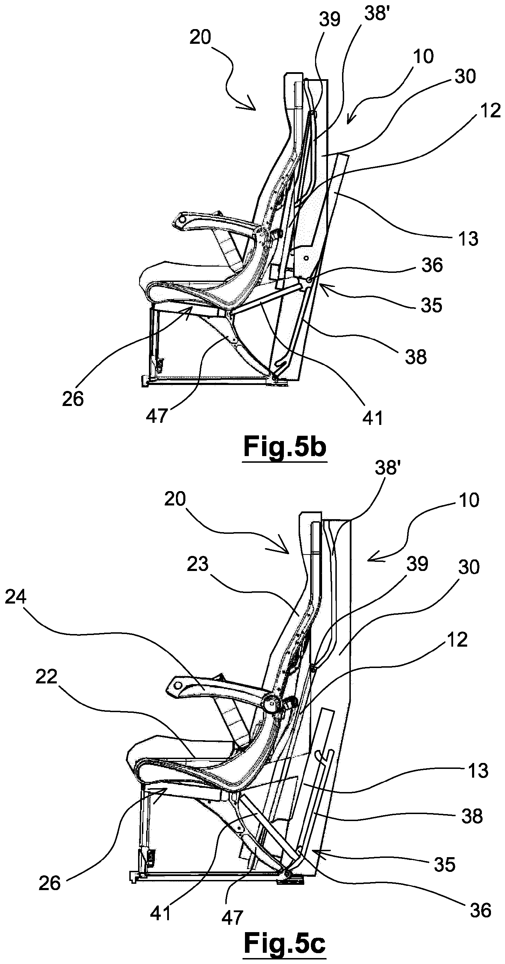

Sur la figure 5b, l'assise 13 remonte automatiquement lorsque l'occupant se relève, et l'ensemble assise 13 et dossier 12 est poussé en direction du plancher.

Les extrémités de l'axe 36 de l'assise 13 coulissent alors vers le bas dans les rainures 38, tandis que les tétons 39 du dossier 12 coulissent dans les rainures 38' correspondantes, de manière à guider l'ensemble assise 13 et dossier 12 vers la position rangée. Les vérins 41 permettent d'amortir le déplacement de l'ensemble assise 13 et dossier 12 lors de leur manipulation par l'opérateur.

Lorsque le siège 10 est en position rangée tel que cela illustré sur la figure 5c, l'ensemble assise 13 et dossier 12 est positionné au moins en partie sous le siège passager 20. En outre, l'ensemble assise 13 et dossier 12 est situé en retrait par rapport au bord avant des montants 30 tourné en direction opposé du siège passager 20.

Afin de faire repasser le siège 10 en position d'utilisation, il suffira à l'utilisateur de tirer sur l'assise 13 pour sortir le siège.

Bien entendu, l'invention pourra également être mise en oeuvre avec un siège passager 20 définissant plus de trois places ou même un siège comportant deux ou une seule place.

L'invention pourra être appliquée indifféremment de la classe du siège passager, qu'elle soit économique, premium, business, ou première classe.

L'invention pourra être mise en oeuvre indifféremment quelle que soit la plateforme d'aéronef utilisée.

L'invention autorise en outre l'intégration de tous les éléments optionnels du siège passager, tels que le système multimédia ou un crochet de vêtement, etc.... Il en est de même pour l'intégration d'éléments optionnels pour le siège pour personnel de bord, tels qu'une lampe, un gilet de sauvetage, une bouteille d'oxygène.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendications annexées.

## Revendications

1. Ensemble destiné à être installé dans une cabine d'aéronef, J Z comportant
- un siège passager (20), notamment multiplaces, muni d'un élément structurel (17), et
- un siège (10) d'aéronef pour personnel de bord comportant:
- une structure de siège (11),
- un dossier (12) et une assise (13) reliés mécaniquement à la structure de siège (11),
- ladite assise (13) étant mobile entre une position rabattue contre le dossier (12) et une position déployée,
- la structure de siège (11) comporte des moyens de liaison mécanique (16) avec l'élément structurel (17) du siège passager (20) adjacent,
**caractérisé en ce que** le siège d'aéronef pour personnel de bord comporte en outre un système de guidage (35) pour guider un déplacement de l'ensemble assise (13) et dossier (12) entre une position d'utilisation et une position rangée au moins en partie sous le siège passager.

2. Ensemble selon la revendication 1, **caractérisé en ce que** la structure de siège (11) comporte deux montants (30) positionnés de part et d'autre de l'ensemble assise (13) et dossier (12).

3. Ensemble selon la revendication 2, **caractérisé en ce que** les moyens de liaison sont constitués par des ouvertures traversantes (31) réalisées dans les montants (30) de la structure de siège (11).

4. Ensemble selon la revendication 3, **caractérisé en ce que** les ouvertures traversantes (31) sont réalisées dans des portions en saillies (32) des montants (30) dirigées dans une direction opposée à celle de l'assise (13).

5. Ensemble selon la revendication 2, **caractérisé en ce que** le système de guidage (35) est formé par un axe (36) de l'assise (13) ayant des extrémités insérées dans des rainures (38) correspondantes réalisées dans les montants (30), et des tétons (39) solidaires de bords latéraux du dossier (12) insérés dans des rainures (38) correspondantes réalisées dans les montants (30).

6. Ensemble selon l'une quelconque des revendications 1 à 5, **caractérisé en ce qu'**il comporte au moins un organe d'amortissement (41) du déplacement de l'ensemble assise (13) et dossier (12) lorsque ledit ensemble assise (13) et dossier (12) passe de la position d'utilisation à la position rangée.

7. Ensemble selon les revendications 5 et 6, **caractérisé en ce que** l'organe d'amortissement (41) est constitué par un vérin à gaz muni d'une première extrémité montée rotative par rapport à un montant (30) et d'une deuxième extrémité montée rotative par rapport à l'axe (36) de l'assise (13).

8. Ensemble selon la revendication 2, et le cas échéant l'une quelconque des revendications 3 à 7, **caractérisé en ce que** les montants (30) comportent des moyens de reprise d'effort (45) en cas de crash.

9. Ensemble selon la revendication 8, **caractérisé en ce que** les moyens de reprise d'effort (45) comportent au moins un bras (46) assurant une liaison mécanique entre un montant (30) et un pied de support (47) du siège passager (20) positionné entre les montants (30).

10. Ensemble selon l'une quelconque des revendications 1 à 9, **caractérisé en ce que** le siège pour personnel de bord (10) est tourné dans une direction opposée à celle du siège passager (20).

## Patentansprüche

1. Aufbau zum Einbau in eine Flugzeugkabine, umfassend
- einen Passagiersitz (20), insbesondere einen Mehrfachsitz, der mit einem Strukturelement (17) versehen ist, und
- einen Flugzeugbesatzungssitz (10) mit:
- einer Sitzstruktur (11),
- einer Rückenlehne (12) und einem Sitzflächenabschnitt (13), die mechanisch mit der Sitzstruktur (11) verbunden sind,
- wobei der Sitzflächenabschnitt (13) zwischen einer gegen die Rückenlehne (12) geklappten Stellung und einer ausgefahrenen Stellung bewegbar ist,
- wobei die Sitzstruktur (11) mechanische Verbindungsmittel (16) zur Verbindung mit dem Strukturelement (17) des benachbarten Passagiersitzes (20) aufweist,
**dadurch gekennzeichnet, dass** der Flugzeugbesatzungssitz ferner ein Führungssystem (35) zum Führen einer Bewegung der durch den Sitzflächenabschnitt (13) und die Rückenlehne (12) gebildeten Baugruppe zwischen einer Gebrauchsstellung und einer Verstaustellung zumindest teilweisen unter dem Passagiersitz umfasst.

2. Aufbau nach Anspruch 1, **dadurch gekennzeichnet, dass** die Sitzstruktur (11) zwei Stützen (30) umfasst, die zu beiden Seiten der durch den Sitzflächenabschnitt (13) und die Rückenlehne (12) gebildeten Baugruppe angeordnet sind.

3. Aufbau nach Anspruch 2, **dadurch gekennzeichnet, dass** die Verbindungsmittel durch Durchgangsöffnungen (31) in den Stützen (30) der Sitzstruktur (11) gebildet sind.

4. Aufbau nach Anspruch 3, **dadurch gekennzeichnet, dass** die Durchgangsöffnungen (31) in vorspringenden Abschnitten (32) der Stützen (30) ausgebildet sind, wobei die vorspringenden Abschnitte in eine Richtung entgegengesetzt zu der des Sitzflächenabschnitts (13) gerichtet sind.

5. Aufbau nach Anspruch 2, **dadurch gekennzeichnet, dass** das Führungssystem (35) durch eine Achse (36) des Sitzflächenabschnitts (13) gebildet ist, wobei deren Enden in entsprechende Nuten (38) in den Stützen (30) eingesetzt sind und Nippel (39), die an den Seitenkanten der Rückenlehne (12) befestigt sind, in entsprechende Nuten (38) in den Stützen (30) eingeführt werden.

6. Aufbau nach einem der Ansprüche 1 bis 5, **dadurch gekennzeichnet, dass** er mindestens ein Dämpfungselement (41) zur Verschiebung der durch den Sitzflächenabschnitt (13) und die Rückenlehne (12) gebildeten Baugruppe umfasst, wenn sich die durch den Sitzflächenabschnitt (13) und die Rückenlehne (12) gebildeten Baugruppe von der Gebrauchsstellung in die Verstaustellung bewegt.

7. Aufbau nach den Ansprüchen 5 und 6, **dadurch gekennzeichnet, dass** das Dämpfungselement (41) durch eine Gaszylinder gebildet ist, die mit einem ersten, relativ zu einer Stütze (30) drehbar gelagerten Ende und einem zweiten, relativ zur Achse (36) des Sitzflächenabschnitts (13) drehbar gelagerten Ende versehen ist.

8. Aufbau nach Anspruch 2 und gegebenenfalls nach den Ansprüchen 3 bis 7, **dadurch gekennzeichnet, dass** die Stützen (30) Belastungserholungsmittel (45) im Bauchlandungsfall aufweisen.

9. Aufbau nach Anspruch 8, **dadurch gekennzeichnet, dass** die Belastungserholungsmittel (45) mindestens einen Arm (46) für eine mechanische Verbindung zwischen einer Stütze (30) und einem zwischen den Stützen (30) positionierten Stützbein (47) des Passagiersitzes (20) umfassen.

10. Aufbau nach einem der Ansprüche 1 bis 9, **dadurch gekennzeichnet, dass** der Flugzeugbesatzungssitz (10) in eine Richtung entgegengesetzt zu der des Passagiersitzes (20) gerichtet ist.

## Claims

1. An assembly to be installed in an aircraft cabin, comprising
- a passenger seat (20), in particular a multi-seat, provided with a structural element (17), and
- an aircraft crew seat (10) comprising:
- a seat structure (11),
- a backrest (12) and a seating part (13) mechanically connected to the seat structure (11),
- said seating part (13) being movable between a position folded against the backrest (12) and an extended position,
- wherein the seat structure (11) comprises mechanical connecting means (16) for the connection with the structural element (17) of the adjacent passenger seat (20), **characterized in that** the aircraft crew seat further comprises a guiding system (35) for guiding a movement of the assembly formed by the seating part (13) and the backrest (12) between a use position and a stored position at least partly under the passenger seat.

2. The assembly according to claim 1, **characterized in that** the seat structure (11) comprises two uprights (30) positioned on either side of the assembly formed by the seating part (13) and the backrest (12).

3. The assembly according to claim 2, **characterized in that** the connecting means are formed by through openings (31) in the uprights (30) of the seat structure (11).

4. The assembly according to claim 3, **characterized in that** the through openings (31) are formed in projecting portions (32) of the uprights (30), said projecting portions being directed in a direction opposite to that of the seating part (13) .

5. The assembly according to claim 2, **characterized in that** the guiding system (35) is formed by an axis (36) of the seating part (13), the ends of said axis being inserted in corresponding grooves (38) in the uprights (30), and nipples (39) secured to lateral edges of the backrest (12) being inserted into corresponding grooves (38) in the uprights (30) .

6. The assembly according to any one of the claims 1 to 5, **characterized in that** it comprises at least one damping member (41) for the displacement of the assembly formed by the seating part (13) and the backrest (12) when said assembly formed by the seating part (13) and the backrest (12) moves from the use position to the stored position.

7. The assembly according to claims 5 and 6, **characterized in that** the damping member (41) is formed by a gas cylinder provided with a first end rotatably mounted relative to one upright (30) and a second end rotatably mounted relative to the axis (36) of the seating part (13).

8. The assembly of claim 2 and, if need be, of the claims 3 to 7, **characterized in that** the uprights (30) comprise strain recovery means (45) in the event of a crash.

9. The assembly according to claim 8, **characterized in that** the strain recovery means (45) comprise at least one arm (46) providing a mechanical connection between one upright (30) and a support leg (47) of the passenger seat (20) positioned between the uprights (30).

10. The assembly according to any one of the claims 1 to 9, **characterized in that** the crew seat (10) is directed in a direction opposite to that of the passenger seat (20).
